# EUROPÄISCHE PATENTSCHRIFT

(11) **EP 0 794 828 B1**
(45) Veröffentlichungstag und Bekanntmachung des Hinweises auf die Patenterteilung: **03.12.2003**
(21) Anmeldenummer: 96931010.1
(22) Anmeldetag: 04.09.1996
(51) Int. Cl.: B01D 63/08

(54) **TRÄGERSCHEIBE UND MEMBRANKISSEN ZUM FILTERN UND TRENNEN**
CARRIER DISC AND MEMBRANE CUSHION FOR FILTRATION AND SEPARATION
DISQUE SUPPORT ET COUSSIN MEMBRANAIRE POUR FILTRATION ET SEPARATION

(30) Priorität: 02.10.1995 DE 19536560
(43) Veröffentlichungstag der Anmeldung: 17.09.1997
(73) Patentinhaber: MFT Membran-Filtrations-Technik GmbH, 50933 Köln (DE)
(72) Erfinder: HÜBBEL, Hans-Ulrich, D-50226 Frechen (DE)
(74) Vertreter: Selting, Günther, Dipl.-Ing.
(86) Internationale Anmeldenummer: EP9603868
(87) Internationale Veröffentlichungsnummer: WO97012664

(56) Entgegenhaltungen:
- DE-A- 3 715 183
- DE-A- 19 527 012
- US-A- 4 613 436

## Beschreibung

Die beschriebene Erfindung betrifft eine Trägerscheibe zur Strömungsführung und ein entsprechend geformtes Membrankissen als Vorrichtung zum Filtern und Trennen von Flüssigkeiten unter Verwendung von Umkehrosmose-, Nanofiltration-, Ultrafiltration- oder Mikrofiltrationsmembrane, wobei abwechselnd Membrankissen und Trägerscheiben so angeordnet werden, daß die zu behandelnde Flüssigkeit beidseitig die Membran überströmt, die Trägerscheibe die Flüssigkeit durch ihre Strömungselemente ausreichend führt und verwirbelt und ohne wesentlichen Druckverlust auf die nächste Scheibenebene leitet.

Trägerscheiben und Membrankissen sind Teil einer Vorrichtung, die als Modul aus den Trägerscheiben, den Membrankissen, Stapelendplatten, Zuganker, Dichtungsplatten und/oder Endflansche und einem zylindrischen Druckrohr bestehen. Im Rahmen von Gesamtanlagen mit verschiedensten Pumpen, Vorfiltrationen, Reinigungsvorrichtungen und Steuerungseinheiten werden diese Modulelemente einzeln oder mehrfach als Filtrationsanlagen für flüssige Medien eingesetzt.

Modulelemente zum Trennen und Filtern von Fluiden vergleichbarer Art sind Stand der Technik und bekannt durch die unterschiedlichsten Patente. Bei den beschriebenen neuartigen Membranelementen handelt es sich um eine Neuentwicklung von Trägerscheiben und Membrankissen eines Plattenmoduls. Plattenmodulen ist gemein, dass sie aus Anström-, Dichtungs- oder Abschlussplatten, Dichtungen, Flanschen, Zuganker und Druckkörpern unterschiedlichster Art und Dimension bestehen.

In DE-A-37 15 183 ist ein Membranelement zur Bildung eines Membranstapels zur Membranfiltration von Fluiden beschrieben, das aus einer Trägerscheibe und einem Membrankissen besteht. Die Trägerscheibe enthält eine Öffnung, durch die das Fluid von einer Seite der Trägerscheibe auf die andere gelangen kann. Auch hierbei erfolgt eine Umlenkung des Fluides um 180°.

Eine Mehrfachumlenkung des Fluides erfolgt bei einer Membranvorrichtung, wie sie aus US-A-4613436 bekannt ist. Diese Membranvorrichtung enthält einen Stapel aus mehreren Trägerscheiben und Membrankissen. Die inneren Fluiddurchlässe sind durch Ausschnitte in den Stapelschichten gebildet, wobei der Fluidfluss abwechselnd radial nach außen und radial nach innen erfolgt.

Die besondere Problematik ist, dass bei allen Plattenmodulen relativ hohe Druckverluste im Modul entstehen. Es ist das Ziel der Entwicklung, im wesentlichen diesen Druckverlust bzw. das Druckgefälle über das Modul zu verringern.

Dies hat insbesondere deshalb Bedeutung, weil durch eine Verringerung der Druckverluste im Modul die auf zubringende elektrische Energie wesentlich verringert werden kann und sich erheblich veränderte Verschaltungsmöglichkeiten (Reihen-, Serien-, Tannenbaumschaltungen) ergeben. Dies bringt insbesondere für Anwendungsfälle in der Abwasser- oder der Produktrecyclingtechnik, wo es darauf ankommt, die Konzentratmenge weitgehend, in der Regel auf das geringstmögliche Volumen einzugrenzen, erhebliche Investitionskosten- und Betriebskostenvorteile. Diese Vorteile verstärken sich noch beim Einsatz von Hochdrucktechniken in der Membrantechnologie, die besonders energieaufwendig sind.

Das Membranelement nach der vorliegenden Erfindung ist definiert durch die Merkmale des Patentanspruchs 1.

Für die Erfindung betrifft ferner eine Trägerscheibe mit den Merkmalen des Patentanspruchs 8 sowie ein Membrankissen mit den Merkmalen des Patentanspruchs 9.

In den Bereichen Nanofiltration, Ultrafiltration und Mikrofiltration, wo die bekannten Plattenmodule bisher wegen der hohen modulimmanenten Druckverluste nicht eingesetzt werden konnten, wird durch die Erfindung ein neuer Einsatzbereich erschlossen.

Durch die grundsätzlich neuartige zirkulare Strömungsführung der beschriebenen Vorrichtung, insbesondere zwischen den Trägerscheiben und den Membrankissen sowie durch die gewählten Strömungsführungselemente auf den Trägerscheiben ist es gelungen, die Druckverluste im Vergleich zu den üblichen Modulen um mehr als 50 % zu senken und somit erheblich die Wirtschaftlichkeit der Anwendung zu steigern sowie den Einsatzbereich zu erweitern.

Gemäß der Erfindung kommt es durch die Form und Ausführung der Trägerscheibe, insbesondere der rampenartigen Strömungsführung von einer Trägerscheibe zur nächsten, zu einer kreisförmigen Überströmung des Membrankissens. Dies wird erreicht durch eine im wesentlichen radiale schlitzartige Durchtrittsöffnung, die rampenartig die Strömung von einer Trägerscheibe zur nächsten führt. Auf diese Weise wird vermieden, was bei allen anderen Plattenmodulsystemen typischerweise erfolgt, nämlich eine wiederholte scharfe 180°-Strömungsumlenkung, die hauptsächlich den Druckverlust verursacht. Bei anderen Plattenmodulsystemen wird mindestens einmal pro Plattenmodulträgerscheibe das Strömungsmedium um 180° umgelenkt und zur nächsten Ebene geführt.

Der Vorteil der erfindungsgemäßen Trägerscheibe besteht im wesentlichen darin, daß das Fluid flächig und ungehindert von beiden Seiten das Membrankissen überstreicht und nicht von Plattenmodulträgerebene zur Trägerebene in einer scharfen oder wie immer gearteten 180°-Strömungsumlenkung zum nächsten Membrankissen geleitet wird, sondern am Ende einer Kreisbahn rampenartig ohne wesentliche Strömungsrichtungsänderung auf das nächste Membrankissen geführt wird und hier weiterhin beidseitig das nächste Membrankissen überströmt.

Die Erfindung wird im weiteren unter Bezugnahme auf die beigefügten Zeichnungen beschrieben.
- Fig. 1:: Trägerscheibe in der Draufsicht
- Fig. 2:: Schnitt B-B der Trägerscheibe (vergrößerter Maßstab)
- Fig. 3:: Einzelheit A: Schlitzartige Durchrittsöffnung (vergrößerter Maßstab)
- Fig. 4:: Einzelheit C: Gestalt der Strömungselemente (vergrößerter Maßstab)
- Fig. 5:: xMembrankissen in der Draufsicht und im Schnitt
- Fig. 6:: Prinzipskizze der Strömungsführung, dargestellt über drei Trägerscheiben einschl. Membrankissen
- Fig. 7:: Vorrichtung als schnittartige Gesamtdarstellung eines Plattenmoduls

### Bezugszeichenliste

- 1: Trägerscheibe
- 10: O-Ring-Nut
- 11: kreisförmiger Rand
- 12: Zentralloch
- 13: Zapfen
- 14: Zentrierrand
- 15: schlitzartige Durchtrittsöffnung
- 16: Steg
- 17: Verdrehsicherung
- 18: Strömungselement
- 180: Spitze
- 181: schmale Seite
- 182: breite Seite
- 2: Membrankissen
- 20: Membranfläche
- 200: Permeatspacer
- 201: untere Membranschicht
- 202: obere Membranschicht
- 21: Schweißnaht
- 22: Zentralloch
- 23: Schlitz

- S1: Fluidströmung auf der Trägerscheibe
- S2: Fluidströmung in der schlitzartigen Durchtrittsöffnung
- P: Permeationsrichtung

- 3: Modul
- 31: Mittelanker
- 32: Spannhülse
- 33: Spannmutter
- 34: obere Stapelendplatte
- 340: Bohrungen
- 35: untere Stapelendplatte
- 36: obere Strömungsumlenkscheibe
- 37: untere Strömungsumlenkscheibe
- 38: oberer Endflansch
- 39: unterer Endflansch
- 40: Feedstutzen
- 41: Konzentrathülse
- 42: Konzentratstutzen

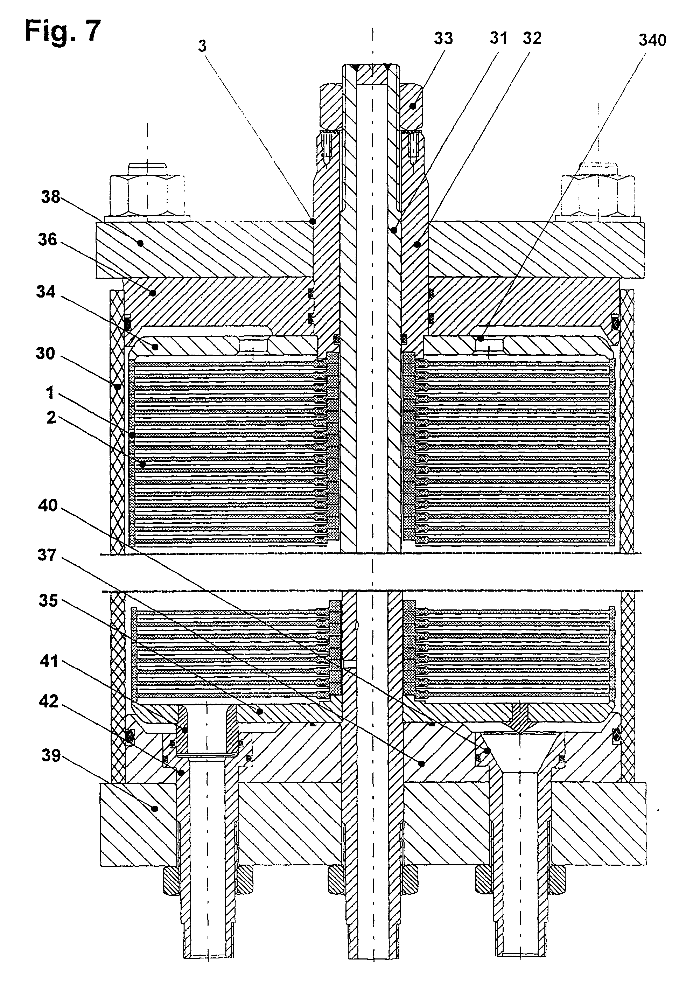

Das Plattenmodul 3, die beschriebene Vorrichtung für Umkehrosmose, Nanofiltration, Ultrafiltration und Mikrofiltration wird in Fig. 7 im Schnitt dargestellt und wird zum besseren Verständnis der Gesamtzusammenhänge zunächst beschrieben. Das Plattenmodul besteht aus einem rohrartigen Druckmantel 30, der über die obere und untere Strömungsumlenkscheibe 36,37 sowie den oberen und unteren Endflansch 38,39 nach außen abgedichtet ist. Im Modul werden über den zentralen Zuganker 31 und die obere und untere Stapelendplatte 34,35 die Trägerscheiben 1 und Membrankissen 2 zusammengespannt. Die Vorspannung wird durch die Spannmutter 33 eingestellt, wobei die Vorspannkraft durch die Spannhülse 32 übertragen wird.

Die Funktion des Moduls 3 ergibt sich wie folgt: Über den Rohrwassereinlaß 40 gelangt das Fluid in das Modul, umströmt den Elementestapel und tritt über die Durchlaßöffnungen 340 der oberen Stapelendplatte 34 auf die erste Trägerscheibe 1. Es überströmt zirkular diese Trägerscheibe und wird dann durch eine schlitzartige Durchtrittsöffnung 15 auf die nächst darunter liegende Trägerscheibe und das entsprechende beabstandete Membrankissen geführt. Das Membrankissen 2 wird sowohl auf der Ober-, als auch der Unterseite von Rohwasser überströmt. Nach einer Kreisbahn erfolgt die weitere rampenartige Ableitung auf die nächste Ebene. Auf diese Weise durchfließt das Fluid den gesamten Elementestapel des Moduls. Der entscheidende Vorteil dieser Strömungsform ist, daß sich die Strömung sehr gleichmäßig, ohne scharfe Richtungsänderung, ausbildet. Dem ankommenden Volumenstrom wird ein ständig gleichbleibender Strömungsquerschnitt zur Verfügung gestellt, so daß sich keine Änderungen der Strömungsgeschwindigkeit ergeben. Die Ausgestaltung der schlitzartigen Durchtrittsöffnung 15 ist dergestalt, daß auch hier die Strömungsgeschwindigkeit konstant gehalten wird. Während der Überströmung des Membrankissens durchdringt eine Fraktion des Stoffstromes die Membranschicht 201,202 ins Innere zum Permeatspacer 200 hin. Dieses sogenannte Permeat wird entlang des Mittelankers 31 und in dessen Innern nach unten zum Permeatsammelschlauch hin abgeführt. Der verbleibende Teil des Rohwassers (Konzentrat) verläßt das Modul durch Konzentrathülse 41 und Konzentratstutzen 42.

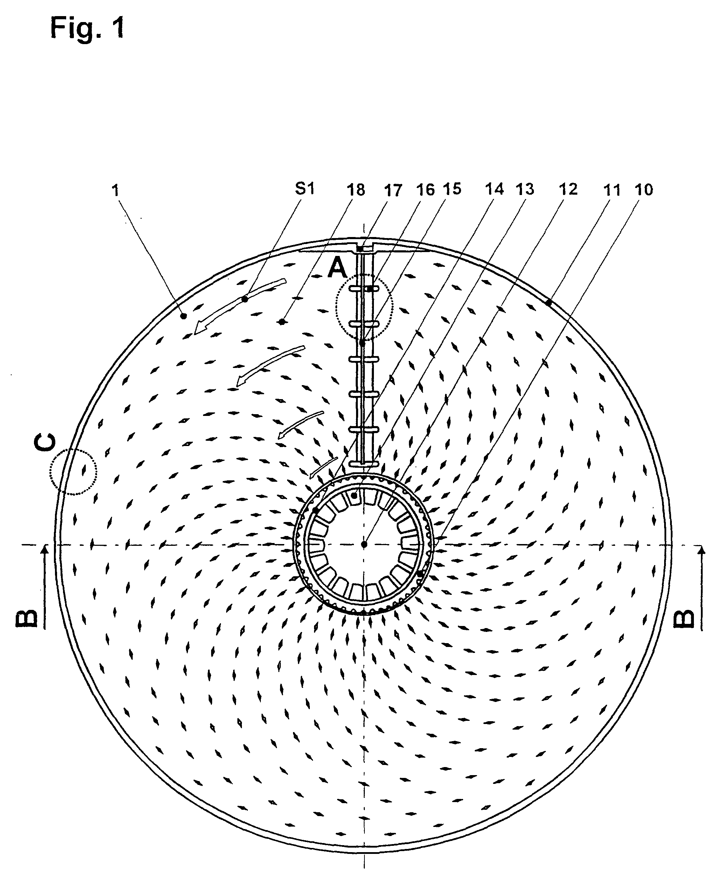

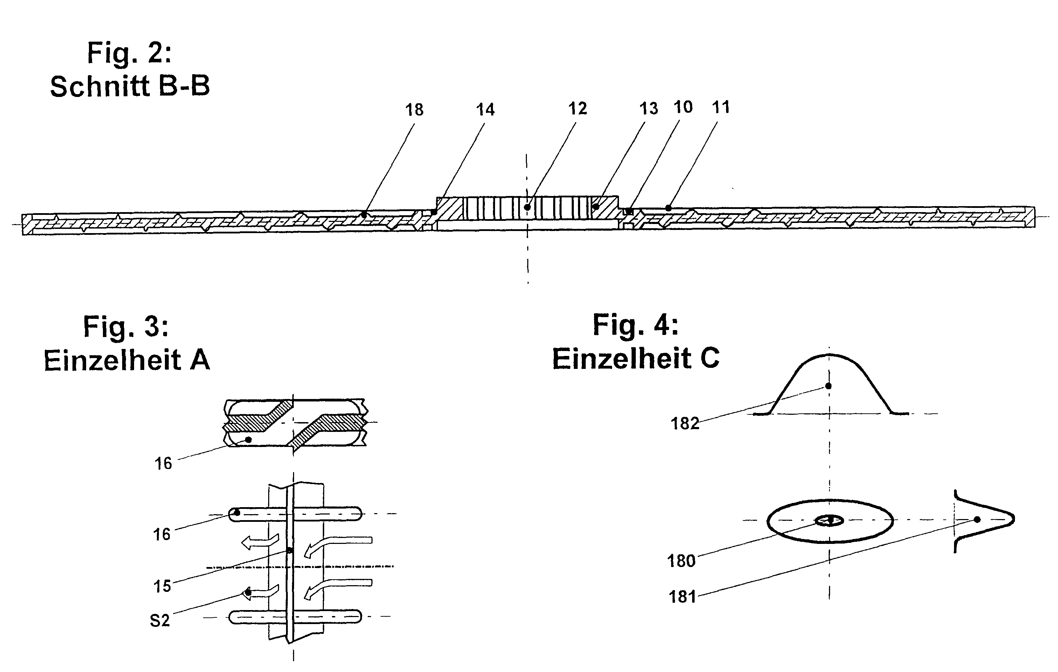

In Fig. 1 wird die erfindungsgemäße Trägerscheibe 1 in der Draufsicht und in Fig. 2 im Schnitt B-B dargestellt. Die Trägerscheibe bildet im wesentlichen einen scheibenförmigen Kreiskörper, der an seiner äußersten Seite einen kreisförmigen Rand 11 und in der Mitte um ein Zentralloch 12 eine Vielzahl von Zapfen 13 mit entsprechenden Zwischenräumen zum zentralen Loch aufweist. Die Zapfen 13 sind gleichmäßig um das zentrale Loch angeordnet. An die Zapfen 13 schließt sich der Zentrierrand 14 und eine O-Ring-Nut 10 an, die zur Aufnahme eines Dichtungselementes (O-Ring), der die Rohwasserseite von der Permeatseite abdichtet, vorgesehen ist. Radial von dem Mittelbereich zum äußeren Rand erstreckt sich eine schlitzartige-Durchtrittsöffnung 15, mittels welcher das Fluid von einer Trägerscheibenebene zur nächsten Trägerscheibenebene nach der konzentrischen zirkularen Überströmung S1 der Trägerscheibe und des Membrankissens fließt. Dies wird dadurch erreicht, daß die Durchtrittsöffnung entlang ihrer radialen Erstreckung abgewinkelte Rampenflächen aufweist, die beim Stapeln so ineinander fassen, daß eine Ableitung des Fluids von einer Trägerscheibenebene zur nächsten erfolgt. Die schlitzartige Durchtrittsöffnung 15 weist zur Strömungsführung und zur Abstützung und Fixierung der Membranen mehrere Stege 16 auf. Im Innenbereich der Trägerscheibe, z.B. am äußeren Rand der Durchtrittsöffnung befindet sich eine Verdrehsicherung an stiftartigen Verankerungen 17, die sowohl die Membrane als auch die Trägerscheiben gegeneinander vor Verdrehen schützt. Auf der Trägerscheibe befinden sich zur Strömungsführung und Strömungsregulierung Strömungselemente 18, die in Fig. 4 vergrößert dargestellt werden. Die Strömungselemente haben neben der Funktion der Strömungsregulierung die Funktion der Beabstandung des Membrankissens von der Trägerscheibe.

Die in Fig. 4 dargestellten Strömungselemente 18 sind im Grundriß oval. Dadurch ergibt sich eine breite Seite 182 und eine schmale Seite 181. Die Anordnung der Elemente auf der Trägerscheibe 1 ist folgendermaßen gewählt: Auf konzentrischen Kreisen um das Zentralloch 12 befinden sich immer jeweils gleich viele Strömungselemente 18, wobei die Ausrichtung zur Hauptströmungsrichtung unterschiedlich ist. Auf den kurzen, und daher bevorzugten, Innenbahnen wird der Strömung durch die breite Seite 182 des Strömungselementes ein hoher Widerstand entgegengesetzt, auf den langen, und daher benachteiligten, Außenbahnen wird der Strömung durch die schmale Seite 181 des Elementes ein geringer Widerstand entgegengesetzt. Dazwischen werden die Strömungselemente entsprechend gleichmäßig mehr oder weniger angewinkelt. Dadurch ergibt sich eine über den gesamten Strömungsquerschnitt gleichmäßige Geschwindigkeitsverteilung über Trägerscheibe 1 und Membrankissen 2. Die Spitze 180 des Strömungselementes 18 bildet eine abgerundete Form, um bei Berührung mit dem empfindlichen Membrankissen 2 dieses nicht zu beschädigen. Außerdem besitzt das Strömungselement 18 die erwünschte Eigenschaft, das strömende Medium zu verwirbeln, und somit eine Turbulenz zu erzeugen, welche für die Trennleistung der Membrane förderlich ist.

In Fig. 2 wird die Trägerscheibe 1 im Schnitt B - B dargestellt. Von der Mittelachse, die das Zentrum des Zentralloches 12 darstellt, durch das der Mittelanker 31 des Moduls geführt wird, weist die Trägerscheibe die bereits oben beschriebenen Zapfen 13 auf. Die Zapfen sind um 50 % bezogen auf die Mitte der Trägerscheibe versetzt nach oben angeordnet, damit eine passgenaue Stapelung der Trägerscheiben einschließlich der dazwischenliegenden Membrankissen möglich wird.

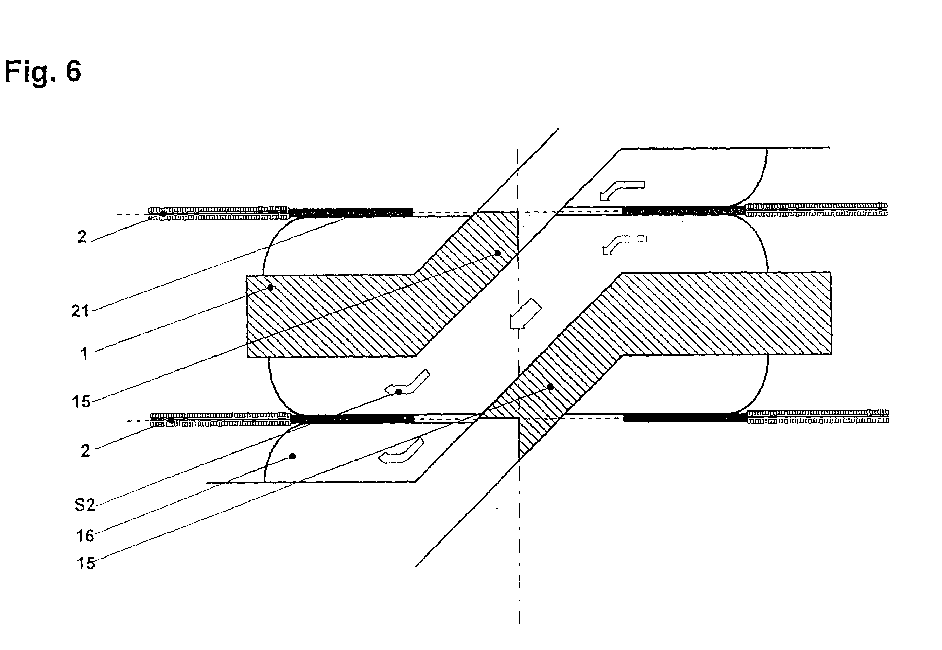

Fig. 3 zeigt als Einzelheit die schlitzartige Durchtrittsöffnung 15 einschließlich der Stege 16 zur Fixierung der Membrankissen. Die rampenartige Gestaltung wird dadurch erzielt, daß an einer schlitzartigen Öffnung in der Trägerscheibe 1 in einem bestimmten Winkel (zwischen 30° und 60°, vorzugsweise 40°) zwei abgewinkelte Rampenflächen ausgebildet sind. Diese fassen beim Stapeln der Trägerscheiben 1 ineinander, so daß eine Zwangsführung der Strömung in die nächst tiefere Ebene vorgegeben wird (siehe auch Fig. 6). Zur Fixierung des Membrankissens im Bereich der Durchtrittsöffnung sind Stege 16 vorgesehen. Die Oberseiten der Stege sind abgeflacht, um die Schweißnaht des Membrankissens 21 einzuklemmen und so zu sichern.

Da die Trägerscheiben 1 im Modul 3 hohen Vorspann- und Betriebskräften ausgesetzt sind, werden die Trägerscheiben 1 aus Kunststoff gefertigt, der ein möglichst geringes Produktfließen zuläßt und dem daher im Produktionsprozeß ein Anteil an Gewebeteilen zur Verstärkung zugesetzt wird.

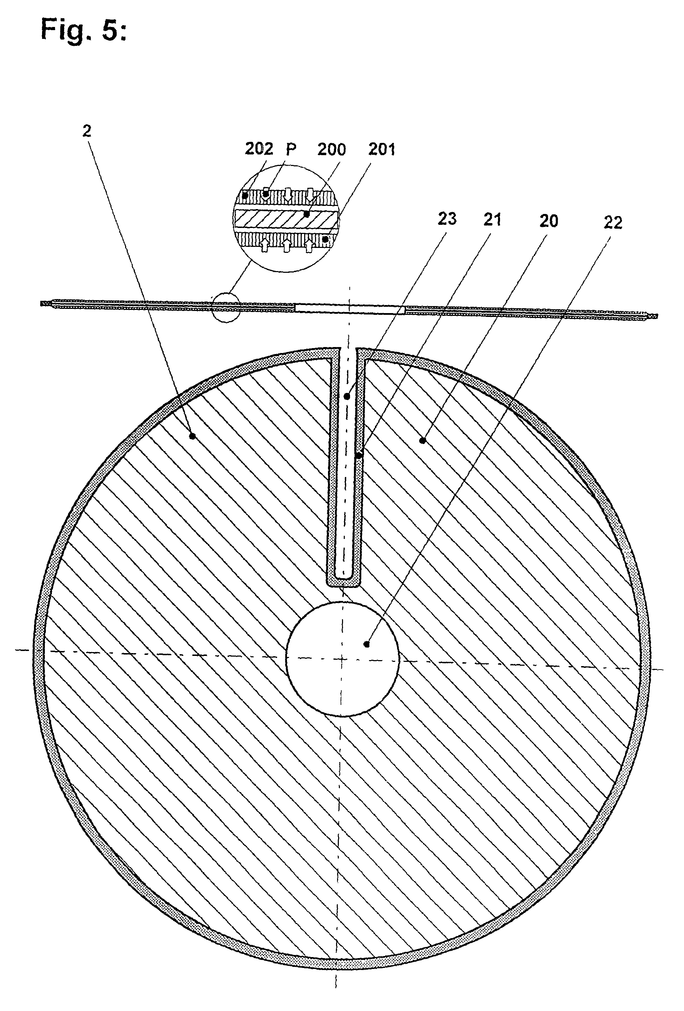

Fig. 5 zeigt in der Draufsicht und im Querschnitt das Membrankissen 2. Es besteht aus insgesamt drei Lagen, dem Permeatspacer 200 in der Mitte, der unteren Membranschicht 201 und der oberen Membranschicht 202. Diese drei Schichten werden in einem speziellen Verfahren miteinander verschweißt. Die Verschweißung bewirkt, daß im Innenbereich des Membrankissens bzw. im Permeatspacer 200 gesammeltes sogenanntes Permeat nur zur Mitte, und damit zum Mittelanker hin, entweichen kann, um dort gesammelt und abgeführt zu werden. Die Membranfläche 20 hat die Eigenschaft, nur eine bestimmte Fraktion des Rohwassers durchtreten zu lassen (semipermeable Membran). Die Permeationsrichtung P ist im vergrößerten Schnitt dargestellt. Die Membrane besitzt ein Zentralloch 22, welches durch die Zapfen 13 der Trägerscheibe 1 auf dieser zentriert wird. Außerdem weist die Membrane einen Schlitz 23 auf, welcher beim Stapeln des Modulstapels in Übereinstimmung mit der schlitzartigen Durchtrittsöffnung 15 der Trägerscheibe 1 zu bringen ist.

In Fig. 6 wird schematisch der Strömungsverlauf S2 in der schlitzartigen Durchtrittsöffnung dreier gestapelter Trägerscheiben 1 im Schnitt der Durchtrittsöffnung dargestellt. Die Membrankissen 2 werden an ihren Schweißnähten 21 zwischen zwei Stegen 16 eingeklemmt und dadurch fixiert. Somit ist gewährleistet, daß etwa die gleiche Menge Strömungsmedium auf die Ober- und Unterseite der Membranen gelangt.

## Patentansprüche

1. Membranelement, bestehend aus Trägerscheibe (1) und Membrankissen (2) zur Bildung eines Membranstapels in Vorrichtungen zur Membranfiltration von Fluiden,
**dadurch gekennzeichnet,**
**dass** Trägerscheibe (1) und Membrankissen (2) einen im wesentlichen kreisförmigen Überströmungsbereich aufweisen,
**dass** die Trägerscheibe (1) eine schlitzartige Durchtrittsöffnung (15) aufweist, die sich im wesentlichen radial über den gesamten Strömungsbereich erstreckt,
**dass** das Membrankissen (2) beidseitig überströmt wird und einen entsprechend gestalteten Schlitz (23) aufweist, welcher beim Stapeln in Übereinstimmung mit der schlitzartigen Durchtrittsöffnung (15) zu bringen ist und die schlitzartige Durchtrittsöffnung entlang ihrer radialen Erstreckung abgewinkelte Rampenflächen aufweist, die beim Stapeln so ineinanderfassen, dass eine Ableitung des Fluids von einer Trägerscheibenebene zur nächsten und eine konzentrische kreisförmige Überströmung der zwischen den Trägerscheiben (1) eingespannten Membrankissen (2) erzwungen wird.

2. Membranelement nach Anspruch 1, **dadurch gekennzeichnet, dass** die Rampenflächen in der schlitzartigen Durchtrittsöffnung (15) der Trägerscheibe (1) einen Neigungswinkel von 30° bis 60° aufweisen.

3. Membranelement nach einem der vorhergehenden Ansprüche, **dadurch gekennzeichnet, dass** durch die Gestaltung der Stege (16) im Bereich der schlitzartigen Durchtrittsöffnung (15) eine Fixierung des Membrankissens (2) im Bereich einer Schweißnaht (21) derart vorliegt, dass das strömende Medium beim Eintritt in die nächste Strömungsebene gleichmäßig zu je ca. 50 % auf die Ober- und Unterseite des Membrankissens (2) verteilt wird.

4. Membranelement nach einem der vorhergehenden Ansprüche, **dadurch gekennzeichnet, dass** die Trägerscheibe (1) auf ihrer Ober- und Unterseite eine große Anzahl von vorzugsweise im Querschnitt ovalen und im Längsschnitt verjüngend, aber in ihrer Spitze abgerundete Erhebungen oder Strömungselemente (180,181,182) aufweisen, die durch ihre Anordnung, Form und Winkelstellung auf der Trägerscheibe (1) für eine gleichmäßige Strömungsführung und -verwirbelung, sowie darüber hinaus für eine ausreichende Beabstandung des Membrankissens (2) von der Oberfläche der Trägerscheibe (1) sorgt.

5. Membranelement nach einem der vorhergehenden Ansprüche, **dadurch gekennzeichnet, dass** die Trägerscheibe (1) zur Fixierung der Trägerscheiben zueinander im Membranstapel stiftartige Verankerungen (17) im Innen- und/oder Außenbereich, vorzugsweise im Außenbereich, aufweist.

6. Membranelement nach einem der vorhergehenden Ansprüche, **dadurch gekennzeichnet, dass** die Trägerscheibe (1) im Innenbereich zwei O-Ringe aufweist, die die Membrankissen (2) im Stapel bei gegebenem Anpressdruck abdichtend fixiert.

7. Membranelement nach einem der vorhergehenden Ansprüche, **dadurch gekennzeichnet, dass** die Trägerscheibe (1) aus Kunststoff gefertigt ist, dem zur Verstärkung bis zu 20 % Gewebeteile zugemischt sind.

8. Trägerscheibe (1), für ein Membranelement gemäß einem der vorhergehenden Ansprüche, **dadurch gekennzeichnet, dass** die Trägerscheibe (1) einen im wesentlichen kreisförmigen Überströmungsbereich und eine schlitzartige Durchtrittsöffnung (15) aufweist, die sich im wesentlichen radial über den gesamten Strömungsbereich erstreckt, und die schlitzartige Durchtrittsöffnung entlang ihrer radialen Erstreckung abgewinkelte Rampenflächen aufweist, die beim Stapeln so ineinanderfassen, dass eine Ableitung des Fluids von einer Trägerscheibenebene zur Nächsten und eine konzentrische kreisförmige Überströmung der beiden Seiten der zwischen den Trägerscheiben (1) eingespannten Membrankissen (2) erzwungen wird.

9. Membrankissen (2), für ein Membranelement gemäß Anspruch 1, **dadurch gekennzeichnet, dass** das Membrankissen (2) einen im wesentlichen kreisförmigen Überströmungsbereich und einen Schlitz (23) aufweist, die sich im wesentlichen radial über den gesamten Strömungsbereich erstreckt, und beim Stapeln in Übereinstimmung mit der schlitzartigen Durchtrittsöffnung (15) der Trägerscheibe (1) zu bringen ist.

## Claims

1. Membrane element consisting of a carrier disk (1) and a membrane cushion (2) for forming a membrane stack in devices for membrane filtration of fluids,
**characterized in that**
said carrierdisk (1) and said membrane cushion (2) provide a generally circular flow-over area,
said carrier disk (1) comprises a slit-like passage (15) extending generally radially across the entire flow area,
said membrane cushion (2) is flown over on both sides and comprises a correspondingly designed slit (23) which is to be registered with the slit-like passage (15) upon stacking, and said slit-like passage comprises along the radial extension thereof angled ramp planes engaging each other, if stacked, such as to force a diversion of the fluid from one carrier disk level to the next one and a concentrically circular flow over said membrane cushions (2) clamped between said carrier disks (1).

2. Membrane element according to claim 1, **characterized in that** the ramp planes in said slit-like passage (15) of said carrier disk (1) provide an angle of inclination of 30° to 60°.

3. Membrane element according to any of the preceding claims, **characterized in that** said membrane cushion (2) is locked into place in the area of the welding seam (21) by the design of the protrusions (16) in the area of said slit-like passage(15) such thatthe flowing medium is spread evenly on the upper and lower side of said membrane cushion (2) at about 50%' each when entering the next flowing level.

4. Membrane element according to any of the preceding claims, **characterized in that** said carrier disc (1) comprises at the upper and lower side thereof a large number of elevations or flow elements (180, 181, 182), preferably oval in cross section and tapered but rounded at the tips thereof in longitudinal section, which elements provide, by the arrangement, shape and angular position thereof, for an even flow guidance and swirl, as well as, additionally, sufficient spacing of said membrane cushion (2) from the surface of said carrier disk (1).

5. Membrane element according to any of the preceding claims, **characterized in that** said carrier disk (1) comprises at the interior and/or exterior area, preferably the exterior area thereof, pin-like anchoring parts (17) for locking the carrier disks together in the membrane stack.

6. Membrane elementaccording to any of the preceding claims, **characterized in that** said carrier disk (1) comprises at the interior area thereof two O-rings sealingly locking said membrane cushions (2) into place in the stack at a given contact pressure.

7. Membrane element according to any of the preceding claims, **characterized in that** said carrier disk (1) is made of plastic to which up to 20% fabric parts have been added for reinforcement purposes.

8. Carrierdisk (1) for a membrane element according to any of the preceding claims, **characterized in that** said carrier disk (1) and said membrane cushion (2) provide a generally circular flow-over area, said carrier disk (1) comprises a slit-like passage (15) extending generally radially across the entire flow area, said membrane cushion (2) is flown over on both sides and comprises a correspondingly designed slit (23) which is to be registered with the slit-like passage (15) upon stacking, and said slit-like passage comprises along the radial extension thereof angled ramp planes engaging each other, if stacked, such as to force a diversion of the fluid from one carrier disk level to the next one and a concentrically circular flow over said membrane cushions (2) clamped between said carrier disks (1).

9. Membrane cushion (2) for a membrane element according to claim 1, **characterized in that** said membrane cushion (2) comprises a generally circular flow-over area and a slit (23) extending generally radially across the entire flow area, which slit is to be registered with the slit-like passage (15) of the carrier disc (1) upon stacking.

## Revendications

1. Elément membranaire comprenant un disque de support (1) et un coussin membranaire (2) pour former une pile membranaire dans des dispositifs de filtration membranaire de fluides, **caractérisé en ce que** le disque de support (1) et le coussin membranaire (2) présentent une zone d'écoulement pour l'essentiel circulaire,
**en ce que** le disque de support (1) présente une ouverture de passage (15) en forme de fente, qui s'étend pour l'essentiel radialement sur toute la zone d'écoulement, **en ce que** l'écoulement se produit aux deux côtés du coussin membranaire (2) qui présente une fente (23) configurée en conséquence, laquelle doit être mise en correspondance avec l'ouverture de passage (15) en forme de fente lors de l'empilement, et **en ce que** l'ouverture de passage en forme de fente, le long de son étendue radiale, présente des surfaces de rampe inclinées, qui coopèrent les unes avec les autres lors de l'empilement pour forcer une déviation du fluide depuis un niveau de disque de support sur le suivant et un écoulement circulaire concentrique sur les coussins membranaires (2) enserrés entre les disques de support (1).

2. Elément membranaire selon la revendication 1, **caractérisé en ce que** les surfaces de rampe présentent un angle d'inclinaison compris entre 30° et 60° dans l'ouverture de passage (15) en forme de fente du disque de support (1).

3. Elément membranaire selon l'une quelconque des revendications précédentes, **caractérisé en ce que**, grâce à la configuration des tenons (16) dans la zone de l'ouverture de passage (15) en forme de fente, le coussin membranaire (2) est fixé dans la zone d'un joint de soudure (21) de telle sorte que le fluide coulant est réparti de façon homogène respectivement à 50% environ sur les surfaces supérieure et inférieure du coussin membranaire (2) lors de l'entrée dans le niveau d'écoulement suivant.

4. Elément membranaire selon l'une quelconque des revendications précédentes, **caractérisé en ce que** le disque de support (1), sur ses surfaces supérieure et inférieure, présente un grand nombre d'élévations ou d'éléments d'écoulement (180, 181, 182) de préférence avec une section transversale ovale et se rétrécissant en coupe longitudinale, mais arrondis au niveau de leur pointe, qui par leur disposition, forme et position angulaire sur le disque de support (1) assurent un guidage et un tourbillonnement homogène du courant, ainsi que, de ce fait, une mise à distance suffisante du coussin membranaire (2) par rapport à la surface du disque de support (1).

5. Elément membranaire selon l'une quelconque des revendications précédentes, **caractérisé en ce que** le disque de support (1) présente des ancrages en forme de tiges (17) dans la zone intérieure et/ou extérieure, de préférence dans la zone extérieure, pour fixer les disques de support les uns aux autres dans la pile membranaire.

6. Elément membranaire selon l'une quelconque des revendications précédentes, **caractérisé en ce que** le disque de support (1) présente deux joints toriques dans la zone intérieure, qui fixent de façon étanche les coussins membranaires (2) dans la pile en présence d'une pression d'appui donnée.

7. Elément membranaire selon l'une quelconque des revendications précédentes, **caractérisé en ce que** le disque de support (1) est réalisé en matière plastique à laquelle sont mêlés pour son renforcement jusqu'à 20% de parts de tissu.

8. Disque de support (1) destiné à un élément membranaire selon l'une quelconque des revendications précédentes, **caractérisé en ce que** le disque de support (1) présente une zone d'écoulement pour l'essentiel circulaire et une ouverture de passage (15) en forme de fente, qui s'étend pour l'essentiel radialement sur toute la zone d'écoulement, l'ouverture de passage en forme de fente présentant des surfaces de rampe inclinées le long de son étendue radiale, qui coopèrent les unes avec les autres lors de l'empilement pour forcer une déviation du fluide depuis un niveau de disque de support sur le suivant et un écoulement circulaire concentrique sur les deux faces des coussins membranaires (2) enserrés entre les disques de support (1).

9. Coussin membranaire (2) destiné à un élément membranaire selon la revendication 1, **caractérisé en ce que** le coussin membranaire (2) présente une zone d'écoulement pour l'essentiel circulaire ainsi qu'une fente (23), qui s'étend pour l'essentiel radialement sur toute la zone d'écoulement et qui doit être mise en correspondance avec l'ouverture de passage (15) en forme de fente du disque de support (1) lors de l'empilement.
